(19) Europäisches Patentamt
European Patent Office
Office européen des brevets

(11) **EP 3 702 601 B1**

(12) **EUROPÄISCHE PATENTSCHRIFT**

(45) Veröffentlichungstag und Bekanntmachung des Hinweises auf die Patenterteilung:
**29.01.2025  Patentblatt 2025/05**

(21) Anmeldenummer: **20158128.7**

(22) Anmeldetag: **19.02.2020**

(51) Internationale Patentklassifikation (IPC):
**F02D 41/00** *(2006.01)*   **F02B 37/04** *(2006.01)*
**F02B 39/10** *(2006.01)*   F02B 37/10 *(2006.01)*

(52) Gemeinsame Patentklassifikation (CPC):
**F02D 41/0007; F02B 37/04; F02B 37/10; F02B 39/10;** F02D 2200/503; Y02T 10/12

(54) **VERFAHREN ZUM BETREIBEN EINES VERBRENNUNGSMOTORS, STEUERGERÄT, UND ELEKTRISCH ANGETRIEBENE LADEEINRICHTUNG**

CONTROL DEVICE; ELECTRICALLY DRIVEN CHARGING DEVICE AND METHOD FOR OPERATING A COMBUSTION ENGINE

PROCÉDÉ DE FONCTIONNEMENT D'UN MOTEUR À COMBUSTION INTERNE, APPAREIL DE COMMANDE ET DISPOSITIF DE CHARGE À COMMANDE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **28.02.2019   DE 102019202707**

(43) Veröffentlichungstag der Anmeldung:
**02.09.2020   Patentblatt 2020/36**

(73) Patentinhaber: **VOLKSWAGEN AG**
**38440 Wolfsburg (DE)**

(72) Erfinder:
• **Keich, Sebastian**
**38114 Braunschweig (DE)**
• **Bartolome, Javier**
**38102 Braunschweig (DE)**
• **Frese, Florian**
**38104 Braunschweig (DE)**
• **Heinken, Sebastian**
**38106 Braunschweig (DE)**

(56) Entgegenhaltungen:
EP-A1- 3 103 991       EP-A1- 3 396 132
US-A1- 2003 141 851

**Beschreibung**

Die vorliegende Erfindung betrifft ein Verfahren zum Betreiben eines Verbrennungsmotors mit einem System zur Aufladung, das einen Abgasturbolader und eine elektrisch angetriebene Ladeeinrichtung zur beim Aufbau eines Ladedrucks umfasst. Die Erfindung betrifft weiter ein Steuergerät, das dazu eingerichtet ist, das erfindungsgemäße Verfahren auszuführen, eine elektrisch angetriebene Ladeeinrichtung, die gemäß dem Verfahren betreibbar ist, einen Verbrennungsmotor mit einer solchen Ladeeinrichtung sowie ein Kraftfahrzeug mit einem entsprechend ausgestatteten Verbrennungsmotor. Die elektrische Ladeeinrichtung kann dabei zur vorübergehenden Dynamikunterstützung oder zur stationären Unterstützung durch eine stabile Anhebung des Motordrehmoments dienen.

Moderne Verbrennungsmotoren (insbesondere Diesel- und Otto-Motoren) werden zur Reduzierung des Kraftstoffverbrauchs immer höher aufgeladen. Dabei werden die Verdichtungsverhältnisse durch eine konsequente Steigerung des Ladedrucks immer weiter erhöht. Insbesondere moderne Brennverfahren nach Miller oder solche, bei denen eine Niederdruck-Abgasrückführung realisiert ist, erfordern sehr hohe Aufladegrade, um die hohen Anforderungen an die gewünschte Fahr-Performance zu erfüllen.

Herkömmlich erfolgt die Aufladung über mechanisch an die Kurbelwelle gekoppelte Kompressoren und über thermodynamisch mit dem Abgasstrom und dem Ladeluftstrom gekoppelte Abgasturbolader, welche die Ladeluft verdichten. Solche Ladeeinrichtungen sind jedoch an den Betriebszustand (Drehmoment, Drehzahl) des Verbrennungsmotors gekoppelt und liefern insbesondere bei niedrigen Drehzahlen nicht den gewünschten hohen Aufladegrad.

Bei modernen Motorkonzepten mit solchen Abgasturboladern (ATL) sind zusätzlich elektrisch angetriebene Ladeeinrichtungen zum sogenannten "E-Boosten" vorgesehen. Dies können entweder elektrisch angetriebene Verdichter (EAV) sein, die im in der Ladeluftstrecke des Motors angeordnet sind und entweder in Strömungsrichtung gesehen vor oder nach der Verdichtereinheit des Abgasturboladers wirken. Sie werden in der Regel drehzahlgesteuert über einen Elektromotor angetrieben.

Ein anderes Konzept betrifft die sogenannten elektrisch unterstützten Abgasturbolader (euATL), bei denen das Laufzeug des Abgasturboladers zusätzlich mit einem ansteuerbaren elektrischen Antrieb drehmomentgesteuert beschleunigt werden kann. Bei Stationärunterstützung kann auch dauerhaft ein zusätzliches Drehmoment aufgeprägt werden. Der elektrische Antrieb kann dabei auf der Antriebswelle zwischen Turbinenrad und Verdichterrad des Abgasturboladers angeordnet sein oder auch an einem Wellenende im Anschluss an das Turbinenrad bzw. an den Verdichter. Mittels der zugeführten elektrischen Energie kann so zusätzlicher Ladedruck zur Ladedruckerhöhung des konventionellen ATL zur Verfügung gestellt werden. Damit kann das Ansprechverhalten des Verbrennungsmotors auf einen Fahrerwunsch zur Beschleunigung verbessert werden, indem der Ladedruck zusätzlich erhöht wird, und zwar bei Betriebszuständen, bei denen unter normalen Betriebsbedingungen der Abgasturbolader noch keine ausreichende zusätzliche Ladedruckerhöhung bewirken kann (Wegfall des sogenannten Turbolochs).

Um eine solche elektrisch angetriebene Ladeeinrichtung (EAV oder euATL) wirksam zu betreiben und das dynamische Verhalten des Verbrennungsmotors zu verbessern, müssen jedoch bestimmte Randbedingungen eingehalten werden. Zum einen soll der Betrieb nur innerhalb der thermodynamisch sinnvollen Grenzen erfolgen, es muss ausreichend elektrische Energie im Bordnetz zur Verfügung gestellt werden können und die maximalen Betriebstemperaturen der elektrischen Bauteile dürfen nicht überschritten werden.

Weitere Anforderungen können darin bestehen, dass zur elektrisch angesteuerten Ladedruckerhöhung ausschließlich oder vornehmlich rekuperierte Energie verwendet werden soll. Damit wäre es möglich, ein verbrauchsneutrales bzw. $CO_2$-neutrales "E-Boosten" zu realisieren.

Ist jedoch eine der oben genannten Bedingungen nicht oder nur teilweise erfüllt, so steht dem Fahrer die elektrisch unterstützte Ladedruckerhöhung nicht zur Verfügung und das Beschleunigungsverhalten eines Fahrzeugs wird überraschend verschlechtert oder das Drehmoment bricht unerwartet ein und beeinträchtigt das Fahrerlebnis.

Die bekannten Ansätze zur Steuerung eines EAV bzw. eines euATL sind nicht dazu in der Lage, diese Nachteile völlig auszuräumen bzw. eine komplexe Berücksichtigung unterschiedlicher Randbedingungen wie Batterieladezustand (SoC), Bauteiltemperatur und/oder Rekuperationsstatus der verfügbaren elektrischen Energie zu berücksichtigen.

Aus der DE 102 23 810 A1 ist eine Vorrichtung zur Steuerung eines elektrisch betriebenen Laders bekannt, bei dem ein Zustand einer Spannungsversorgung zum Betrieb des elektrischen Laders ermittelt wird und das in Abhängigkeit des Zustandes der Spannungsversorgung eine zu erwartende Einschränkung beim Betrieb des elektrischen Laders signalisiert wird. Der Fahrer wird zwar hier vor einer beeinträchtigten Fahrleistung gewarnt, eine sprunghafte Fahrleistungsbeeinträchtigung kann jedoch bei diesem Ansatz nicht verhindert werden.

Auch andere Ansätze, wie sie beispielsweise aus der DE 10 2015 006 401 A1 oder US 2003/0106541 A1 bekannt sind, beschränken sich auf die Ansteuerung einer elektrischen Ladeeinrichtung unter Berücksichtigung von Randbedingungen wie beispielsweise einer maximal möglichen Stromentnahme aus dem Energiespeicher, verhindern aber keinen plötzlichen Wegfall der E-Boost-Funktionalität.

Aus der DE 102 03 974 A1 ist ein Ansatz bekannt, bei dem die Ansteuerung eines elektrisch betriebenen Laders so erfolgt, dass eine Änderungsgeschwindigkeit für eine Erhöhung der Drehzahl des elektrischen Laders in Abhängigkeit von einer aktuellen Versorgungsspannung vorgegeben wird und so ein kritischer Spannungseinbruch verhindert wird, der sonst beim Betrieb des elektrischen Laders auftreten könnte. Auch hier wird die E-Boost-Funktion möglicherweise überraschend eingeschränkt.

Die US 2003/141851 A1 offenbart einen elektrischen Lader, der einen Motor zum Antrieb eines Verdichters umfasst. Der Verdichter des elektrischen Laders kann mit einem Abgasturbolader zur Verdichtung der angesaugten Luft einer Brennkraftmaschine zusammenwirken. Die Brennkraftmaschine ist zum Antrieb eines Kraftfahrzeugs vorgesehen. Weiterhin ist eine Batterie vorgesehen, die den Motor des elektrischen Laders mit einer Versorgungsspannung versorgt. Die Drehzahl des elektrischen Laders wird in Abhängigkeit einer aktuellen Versorgungsspannung vorgegeben.

Die EP 3 396 132 A1 offenbart eine Motorsteuervorrichtung, die einen elektrischen Lader zum Aufladen der Ansaugluft mittels eines Elektromotors und einen mechanischen Lader zum Zurückgewinnen von Abgasenergie mit einer Turbine und zum Aufladen der Ansaugluft umfasst.

Es besteht also die Aufgabe, ein verbessertes Verfahren zum Betreiben eines Verbrennungsmotors mit einem System zur Aufladung, das einen Abgasturbolader und eine elektrisch angetriebene Ladeeinrichtung zur Dynamikunterstützung (E-Boost-Funktion) beim Aufbau eines Ladedrucks umfasst, zu verbessern und dabei wenigstens einen Teil der bekannten Nachteile auszuräumen. Insbesondere besteht die Aufgabe, ein solches Verfahren dahingehend zu verbessern, dass die Ansteuerung der elektrisch angetriebenen Ladeeinrichtung unter Berücksichtigung von rekuperativ gewonnener Energie erfolgen kann.

Diese Aufgabe wird durch das erfindungsgemäße Verfahren gemäß Anspruch 1, durch einen Verbrennungsmotor gemäß Anspruch 12 und ein Kraftfahrzeug gemäß Anspruch 13 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung. Ein erfindungsgemäßes Verfahren zum Betreiben eines Verbrennungsmotors mit einem System zur Aufladung, das einen Abgasturbolader und eine elektrisch angetriebene Ladeeinrichtung zur Dynamikunterstützung und/oder zur stationären Drehmomentenerhöhung beim Aufbau eines Ladedrucks umfasst, weist folgende Schritte auf:

- Bestimmen eines Antriebskriteriums der Ladeeinrichtung
- Festlegen einer Ausgangsgröße des Antriebskriteriums
- kontinuierliches Bestimmen eines Reduktionsfaktors des Antriebskriteriums innerhalb eines Bilanzzeitraums
- Anwenden des Reduktionsfaktors auf das Antriebskriterium
- Betreiben der Ladeeinrichtung mit dem um den Reduktionsfaktor verringerten Antriebskriterium

Durch das zyklische Bestimmen eines Reduktionsfaktors des Antriebskriteriums innerhalb eines Bilanzzeitraums können zwei wichtige Ziele beim Betreiben der elektrisch angetriebenen Ladeeinrichtung erreicht werden. Zum einen können unterschiedlichste Randbedingungen berücksichtigt werden, die beim Betrieb einer elektrisch angetriebenen Ladeeinrichtung zu beachten sind (verfügbare elektrische Energie im Bordnetz, Ladezustand einer Batterie, Temperaturrandbedingungen für unterschiedliche Bauteile, Verbrauchs-/CO2-neutraler Betrieb der elektrisch angetriebenen Ladeeinrichtung). Weiter wird durch das zyklische bzw. kontinuierliche Bestimmen des Reduktionsfaktors in einem Bilanzzeitraum bei angemessener Wahl dieses Bilanzzeitraums sichergestellt, dass sich der Reduktionsfaktor nicht sprunghaft verändert und damit auch keine sprunghafte bzw. überraschende Veränderung des Betriebsverhaltens einstellt. Verändert sich beispielsweise der Ladezustand einer Batterie dahingehend, dass die Ladung abnimmt, so wird der Reduktionsfaktor in kleinen Schritten bzw. kontinuierlich verändert und an den jeweils vorliegenden Ladezustand (SoC) angepasst. Sinkt nun der Ladezustand über mehrere Zyklen oder während eines Bilanzzeitraums, so sinkt die durch die elektrisch angetriebene Ladeeinrichtung bereitgestellte Dynamikunterstützung beim Aufbau des Ladedrucks kontinuierlich so dass für den Fahrer die nur jeweils geringe Reduktion kaum wahrnehmbar ist.

Erfindungsgemäß wird der Bilanzzeitraum in Abhängigkeit von einem Betriebszustandsprofil angepasst. Zeigt es sich beispielsweise, dass sich Betriebszustände vergleichsweise schnell verändern (hohe thermische Schwankungen, hohe Schwankungen im Batterieladezustand, häufige Wechsel des Motorbetriebszustands (Beschleunigen), so kann der Bilanzzeitraum entsprechend verkürzt werden. Umgekehrt kann der Bilanzzeitraum auch verlängert werden, wenn stabile Betriebszustände festgestellt werden. Das Verfahren erlaubt so eine sehr anpassungsfähige Dynamikunterstützung, ohne dass es zu plötzlichen oder sprunghaften Veränderungen im Fahrverhalten des Fahrzeugs kommt.

In einer Weiterbildung des Verfahrens umfasst das Antriebskriterium eine der Größen: Antriebsmoment, Antriebsdrehzahl, Versorgungsstrom und/oder Versorgungsspannung. Damit kann unterschiedlichen Konzepten der elektrisch angetriebenen Ladeeinrichtung Rechnung getragen werden. EAVs werden üblicherweise über eine Steuerung der Antriebsdrehzahl angesteuert, um einen Wunschladedruck (betriebspunktabhängig) einzustellen. Dazu ist ein EAV üblicherweise mit einer Leistungselektronik gekoppelt, welche dann einen entsprechenden Strom bzw. eine entsprechende Spannung zur Ansteuerung des Elektromotors einstellt. Dagegen werden bei elektrisch unterstützten Abgasturboladern (euATL) üblicherweise drehmomentabhängige Ansteuerungen realisiert. Auch hier wird über eine entsprechende Leistungselektronik der elektrische Antriebsmotor mit einem einstellbaren elektrischen Strom bzw. einer einstellbaren elektrischen Spannung angesteuert.

Erfindungsgemäß umfasst der Reduktionsfaktor einen elektrischen Verbrauchs-/Rekuperationsfaktor $X_{Eco}$, bei dem berücksichtigt wird, wie groß der Anteil an rekuperativ gewonnener Energie ist, der im elektrischen Energiespeicher (Batterie) zur Verfügung steht. Damit kann der Betrieb der Ladeeinrichtung unter Berücksichtigung der rekuperativ zur Verfügung stehenden Energie erfolgen. Es ist also ein verbrauchsneutraler Betrieb der Ladeeinrichtung möglich, indem berücksichtigt wird, dass nur rekuperativ zur Verfügung stehende elektrische Energie zum Betrieb der Ladeeinrichtung verwendet wird.

Dabei können unterschiedliche Ansätze zur Nutzung rekuperativer Energie verfolgt werden.

Elektrisch angetriebene Verdichter verfügen in der Regel über keine eigene Rekuperationsmöglichkeit. Trotzdem ist es möglich, diese mit rekuperativ gewonnener Energie zu versorgen, die beispielsweise über einen Riemenstartergenerator (RSG) im Segelbetrieb eines Fahrzeugs gewonnen wird. Dabei ist auch möglich, nur einen bestimmten Anteil, also einen bestimmten Prozentsatz der so rekuperativ gewonnenen Energie für den Betrieb der Ladeeinrichtung (hier des elektrisch angetriebenen Verdichters) vorzusehen.

Elektrisch unterstützte Abgasturbolader dagegen können so gestaltet sein, dass sie selbst über die an der Laufzeugwelle wirkende elektrische Maschine rekuperative Energie zur Ladung eines Energiespeichers abgeben. Diese Energie kann erfasst werden und dann wieder beim Antrieb (also der elektrischen Unterstützung) des euATLs abgegeben werden. Auf diese Weise ist die elektrische Unterstützung des euATLs so zu steuern, dass sie verbrauchs- und damit CO2-neutral realisierbar ist.

Optional kann der Reduktionsfaktor auch noch einen der folgenden Faktoren umfassen: einen thermodynamischen Faktor $f_{thermo}$, einen Ladezustandsfaktor $f_{SoC}$ und/oder einen oder mehrere Temperaturfaktoren $f_{Temp}$.

Dabei berücksichtigt der thermodynamische Faktor, thermodynamisch sinnvolle Betriebszustände des EAV bzw. des euATL. Dies erfolgt beispielsweise kennfeldgesteuert, indem für einen bestimmten Betriebspunkt ein gewünschter bzw. erforderlicher Ladedruck abrufbar ist, dem dann wiederum ein bestimmter Betriebszustand (Drehzahl, Drehmoment) der Ladeeinrichtung entspricht. Bei einem EAV wird damit zum Beispiel eine maximal mögliche Drehzahl auf eine thermodynamisch sinnvolle Drehzahl zum Erreichen des gewünschten Ladedrucks eingestellt. Bei einem euATL wird in ähnlicher Weise ein maximal mögliches Antriebsmoment auf ein thermodynamisch sinnvolles Antriebsmoment reduziert, um den gewünschten Ladedruck einzustellen.

Ein Ladezustandsfaktor berücksichtigt dabei den Ladezustand eines elektrischen Energieversorgungssystems. Dies kann sowohl den Ladezustand einer elektrischen Batterie betreffen oder aber auch den Betriebszustand eines stromliefernden Generators während des Motorbetriebs.

Der Temperaturfaktor kann einen oder mehrere Bauteiltemperaturen berücksichtigen, die zum Betrieb der Ladeeinrichtung kritisch sein können (zum Beispiel eine Betriebstemperatur der Leistungselektronik, eine Verdichteraustrittstemperatur des Abgasturboladers, eine Temperatur relevanter elektromagnetischen Bauteile des Elektromotors).

In einer Ausbildung des Verfahrens wird der Verbrauchs-/Rekuperationsfaktor dadurch bestimmt, dass eine über einen zweiten Bilanzzeitraum ermittelte Energiedifferenz $\Delta E_{Eco}$ zwischen einer rekuperierten Energiegröße $E_{Reku}$ und einer Unterstützungsenergiegröße $E_{Boost}$ und eine in dem ersten Bilanzzeitraum ermittelte Bedarfsenergiegröße $E_{Bedarf,Boost}$ nach folgender Beziehung berücksichtigt wird.

$$X_{Eco} = \frac{\Delta E_{Eco}}{E_{Bedarf,Boost}}$$

Der zweite Bilanzzeitraum betrifft dabei eine Gesamtbetriebszeit des Motors oder eine Fahrtdauer. In diesem zweiten Bilanzzeitraum wird dann die gesamte rekuperierte Energie und die gesamte abgerufene Unterstützungsenergie (Boostenergie) gegeneinander aufgewogen und bilanziert.

In dem (ersten) Bilanzzeitraum, der auch die Zeitdauer des kontinuierlichen Bestimmens des Reduktionsfaktors entspricht, wird eine Bedarfsenergiegröße aus dem individuellen Fahrverhalten abgeleitet. Diese entspricht einem prädizierten oder zu erwartenden Energiebedarf, der zum Betrieb der Ladeeinrichtung genutzt werden soll. Der daraus gebildete Quotient gibt an, wie stark das Antriebskriterium reduziert wird. Liegt beispielsweise die ermittelte Bedarfsenergiegröße unter der Energiedifferenz zwischen der rekuperierten Energiegröße und der Unterstützungsenergiegröße, so findet keine Reduktion statt. Liegt der Bedarf jedoch darüber, so wird der Reduktionsfaktor wirksam und reduziert das Antriebskriterium entsprechend.

In einer Weiterbildung des Verfahrens ist dabei der erste Bilanzzeitraum kleiner als der zweite Bilanzzeitraum. Damit kann sichergestellt werden, dass die Bestimmungszyklen für die Reduktionsfaktoren so kurz sind, dass keine deutlich spürbare Reduktion der elektrischen Zusatzleistung, sprich der Verdichterleistung feststellbar ist.

Dabei hat sich ergeben, dass die Dauer eines ersten Bilanzzeitraums zwischen 1 und 10 min beträgt und vorzugsweise zwischen 2 und 3 min beträgt.

In einer Weiterbildung des Verfahrens wird der Verbrauchs-Rekuperationsfaktor nur berücksichtigt, wenn dieser kleiner eins ist.

In einer weiteren Ausbildung des Verfahrens wird der thermodynamische Faktor so bestimmt, dass er ein Maximum des Antriebskriteriums so reduziert, dass während der Dynamikunterstützung mittels der Ladeeinrichtung ein maximaler, thermodynamisch sinnvoller Ladedruck aufbaubar ist. Dieser thermodynamische Faktor ist wichtig, um einen wirkungslosen (Über-)Betrieb der Ladeeinrichtung mit unnötig überhöhter Leistungsaufnahme zu verhindern.

In einer Weiterbildung des Verfahrens ist der Ladezustandsfaktor aus einer Differenz zwischen einem Ist-Ladezustand und einem Grenzladezustand bestimmbar. So kann berücksichtigt werden, dass eine gewünschte Energiereserve zur Verfügung steht, wenn die Ladeeinrichtung betrieben werden soll. So kann verhindert werden, dass ein festlegbarer Grenzladezustand durch den Betrieb der Ladeeinrichtung unterschritten wird. Auch hier gilt wieder, dass durch die zyklische Bestimmung bei einer Annäherung an den Grenzladezustand die Wirkung der Ladeeinrichtung allmählich, also kontinuierlich und wenig spürbar und nicht abrupt und überraschend reduziert wird.

In einer Weiterbildung des Verfahrens kann der Temperaturfaktor aus einer Differenz zwischen einer kritischen Bauteiltemperatur und einer Ist-Bauteiltemperatur bestimmbar sein. Um einen Reduzierfaktor zwischen Null und Eins zu erreichen, wird dazu die Beziehung genutzt, dass die Differenz zwischen der kritischen Bauteiltemperatur und der Ist-Bauteiltemperatur ins Verhältnis zur kritischen Bauteiltemperatur gesetzt wird.

Über ein Steuergerät, das dazu eingerichtet ist, das System zur Aufladung gemäß dem erfindungsgemäßen Verfahren einzustellen, kann ein Verbrennungsmotor in der gewünschten Weise betrieben werden. Die Erfindung betrifft insbesondere auch eine elektrisch angetriebene Ladeeinrichtung, die als euATL oder EAV ausgebildet ist, und gemäß dem erfindungsgemäßen Verfahren betreibbar ist. Dabei gilt, dass das Antriebskriterium bei einer als euATL ausgebildeten Ladeeinrichtung ein Antriebsmoment ist und bei einer als EAV ausgebildeten Ladeeinrichtung eine Antriebsdrehzahl.

Weiter betrifft die Erfindung auch einen Verbrennungsmotor mit einer solchen Ladeeinrichtung sowie ein Kraftfahrzeug mit einem solchen Verbrennungsmotor.

Ausführungsbeispiele der Erfindung werden nun beispielhaft und unter Bezugnahme auf die beigefügte Zeichnung beschrieben, zeigt:

Fig. 1 einen schematisch dargestellten Verbrennungsmotor mit einem euATL, der zur Ausführung des erfindungsgemäßen Verfahrens geeignet ist;

Fig. 2 eine schematische Darstellung eines Verbrennungsmotors mit einem EAV, der zur Ausführung des erfindungsgemäßen Verfahrens geeignet ist;

Fig. 3 eine schematische Darstellung, welche die Bestimmung des Korrekturfaktors mit einem EAV illustriert;

Fig. 4 eine schematische Darstellung, welche die Bestimmung des Korrekturfaktors mit einem euATL illustriert und

Fig. 5; Fig eine schematische Darstellung des erfindungsgemäßen Verfahrens.

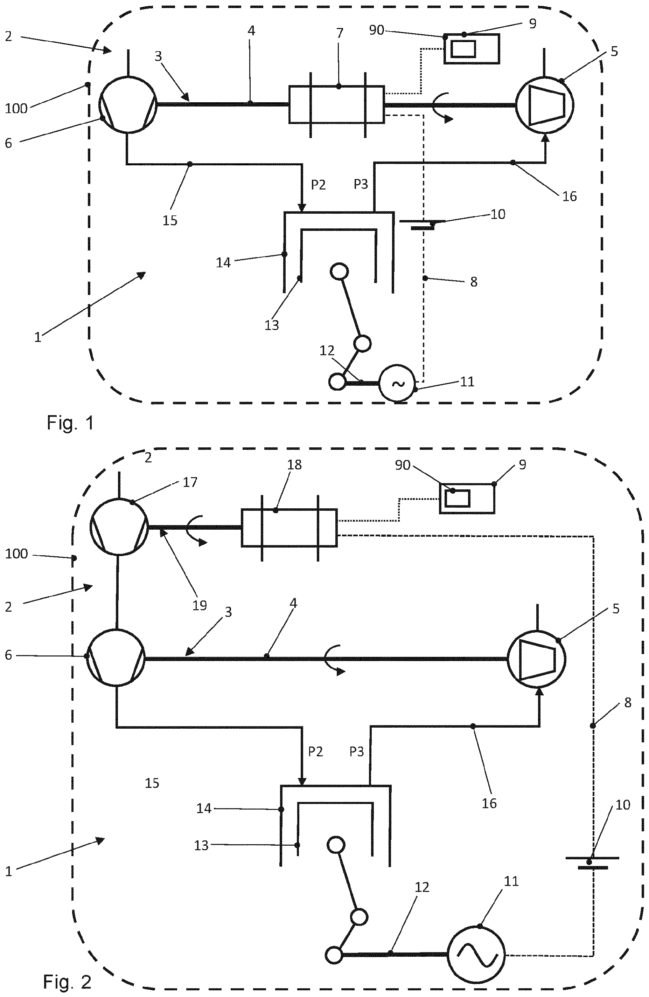

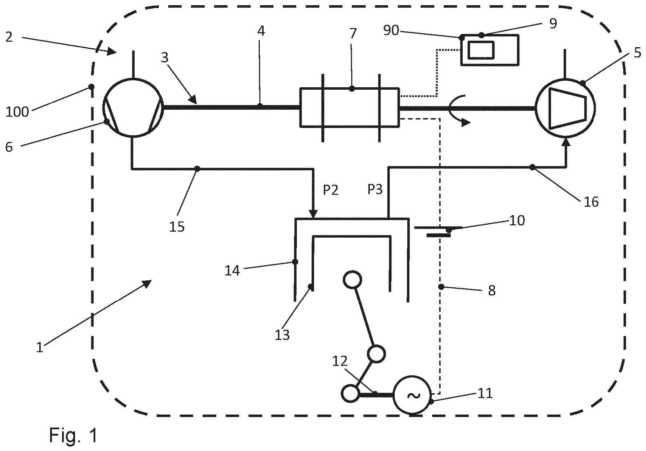

Fig. 1 zeigt ein Ausführungsbeispiel eines erfindungsgemäßen Verbrennungsmotors 1 in einem Fahrzeug 100 mit einem System 2 zur Aufladung mit einem Abgasturbolader (ATL) 3, der hier als elektrisch unterstützter Abgasturbolader (euATL) ausgebildet ist, bei dem auf einer Laufzeugwelle 4, welche die Turbine 5 mit dem Verdichter 6 koppelt, ein Elektromotor 7 angeordnet ist, der über ein elektrisches Bordnetz 8 mit Energie versorgt wird, und über ein Steuergerät 9 (ECU) ansteuerbar ist.

Das elektrische Bordnetz 8 weist einen Stromspeicher 10 und eine elektrische Maschine 11 auf - zum Beispiel einen Riemenstartergenerator (RSG) - der sowohl generatorisch als auch motorisch antreibbar ist, und der mechanisch mit der Kurbelwelle 12 gekoppelt ist. Die Kurbelwelle 12 wird über einen oder mehrere Kolben 13 des bzw. Zylinder 14 des Verbrennungsmotors angetrieben. Die Luftzufuhr erfolgt über den Ansaugtrakt 15 in den Zylinder 14 und das dort gebildete Abgas wird durch den Abgastrakt 16 abgeführt. Die Frischluft wird dabei durch den Verdichter 6 geführt und dort bei Betrieb des Abgasturboladers 3 verdichtet und mit dem Ladedruck $p_2$ in den Zylinder 14 geführt. Dabei wird Kraftstoff zugeführt, die Zündung erfolgt im Zylinder 14 (Fremd- oder Selbstzündung) und das Abgas wird mit dem Abgasgegendruck $p_3$ in die Turbine 5 geführt, wo ein Teil der Abgasenthalpie die Turbine 5 und damit den Verdichter 6 antreibt, die über die Laufzeugwelle 4 miteinander gekoppelt sind.

Der Elektromotor 7 bildet zusammen mit dem Abgasturbolader 3 eine elektrisch angetriebene bzw. antreibbare Ladeeinrichtung. Die Ansteuerung erfolgt dabei über das Steuergerät 9, dessen Funktion weiter unten näher erläutert wird. Grundsätzlich dient der euATL 3 zum Aufbau des Ladedrucks $p_2$ und zur Dynamikunterstützung beim Beschleunigen. Insbesondere bei der Beschleunigung aus vergleichsweise niedrigen Drehzahlbereichen ist die Wirkung des nicht zusätzlich angetriebenen Abgasturboladers 3 zunächst nur sehr eingeschränkt (Turboloch). In diesem Drehzahlbereich wird nun der Elektromotor 7 zusätzlich angetrieben und stellt ein Antriebsmoment $M_{soll,\,euATL}$ zur Verfügung, welches den Verdichter 6 zusätzlich antreibt und so auch bei niedrigen Drehzahlen einen erhöhten Ladedruck $p_2$ bereitstellt.

Der Elektromotor 7 ist als elektrische Maschine ausgebildet, die sowohl motorisch als auch generatorisch arbeiten kann. Damit kann über den Elektromotor 7 im Schubbetrieb elektrische Energie über den Antrieb der Turbine 5 rekuperiert werden und in das Bordnetz 8 bzw. in den Stromspeicher 10 eingespeist werden. Dabei wird sowohl der rekuperierte Energieanteil $E_{Reku}$ und ein zur dynamischen Unterstützung entnommene Energieanteil $E_{Boost}$ in der Steuerung 9 während eines Bilanzzeitraums $t_{V2}$ erfasst und gegebenenfalls gegeneinander bilanziert (siehe unten).

Fig. 2 zeigt ein zweites Ausführungsbeispiel eines erfindungsgemäßen Verbrennungsmotors 1. Beim System zur Aufladung 2 ist hier die elektrisch angetriebene Ladeeinrichtung als elektrisch angetriebener Verdichter (EAV) 19 ausgebildet ist, der unabhängig vom Abgasturbolader 3 betrieben wird. Dabei ist ein eigener Verdichter 17 im Ansaugtrakt 15 angeordnet, der über einen Elektromotor 18 antreibbar ist, der ebenfalls über das Bordnetz 8 mit Strom versorgt wird und über das Steuergerät 9 angesteuert wird. Der Verdichter 17 ist hier in Strömungsrichtung gesehen vor dem Verdichter 6 des Abgasturboladers angeordnet. Es gibt Ausführungen, bei denen der Verdichter 17 des EAV in Strömungsrichtung gesehen nach dem Verdichter 6 des Abgasturboladers 3 angeordnet ist.

Die Funktion des Elektromotors 18 ist die gleiche wie des Elektromotors 7. Der EAV 19 dient dazu, eine Dynamikunterstützung beim Aufbau des Ladedrucks - insbesondere in niedrigen Drehzahlbereichen - zur Verfügung zu stellen (E-Boost-Modus). Der EAV 19 ist jedoch nicht in der Lage, rekuperierte Energie ins Bordnetz 8 einzuspeisen

Es ist jedoch möglich, den Elektromotor 18 auch über rekuperierte Energie zu betreiben, die über die elektrische Maschine 11 (RSG) ins Bordnetz eingespeist wird.

Weiter ist es auch möglich, in der Ausführung gemäß Fig. 1 die elektrische Maschine 11 so anzusteuern, dass diese aus der über den Elektromotor 7 rekuperierten Energie angetrieben wird und damit die zusätzliche Energie direkt an der Kurbelwelle 12 antriebswirksam zur Verfügung steht.

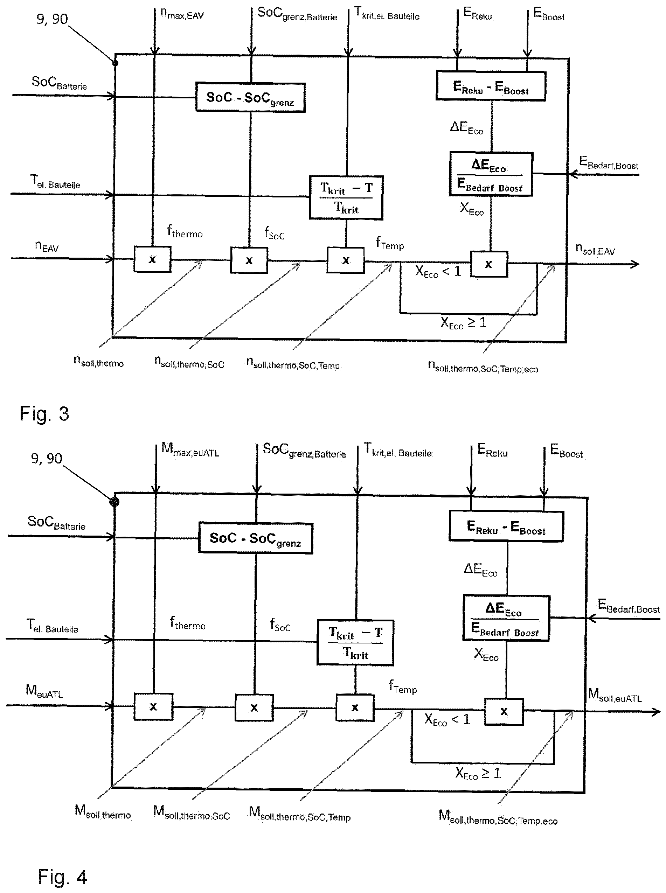

Fig. 3 zeigt nun die Ansteuerung der elektrisch angetriebenen Ladeeinrichtung anhand des elektrisch angetriebenen Verdichters EAV 19 (Fig. 2). Das Steuergerät 9 empfängt dazu mehrere Signale, die durch eingehende Pfeile dargestellt sind. Die Ansteuerung des Elektromotors 18 des elektrisch angetriebenen Verdichters 19 erfolgt drehzahlgesteuert. Dazu umfasst das Steuergerät 9 einen Steuerbereich 90 (in Fig. 3 und Fig. 4 dargestellt), der entsprechenden Signale verarbeitet, um unter Verwendung des erfindungsgemäßen Verfahrens eine Soll-Drehzahl $n_{soll,\ EAV}$ zu ermitteln. Die Drehzahl $n_{EAV}$ bildet hier das Antriebskriterium der Ladeeinrichtung. Zur Bestimmung der Soll-Drehzahl $n_{soll,\ EAV}$ wird zunächst ausgehend von einer technisch möglichen Maximal-Drehzahl $n_{max,\ EAV}$ und einem thermodynamischen Reduzierungsfaktor $f_{thermo}$ eine thermodynamisch sinnvolle Drehzahl $n_{soll,\ thermo}$ abgeleitet. Der Faktor $f_{thermo}$ ergibt sich beispielsweise aus einem Kennfeld, bei dem bestimmten Betriebspunkten bestimmte Ladedrücke $p_2$ zugeordnet sind und jedem dieser Ladedrücke $p_2$ eine Drehzahl $n_{soll,\ thermo}$ zugeordnet ist bzw. ein thermodynamischer Reduzierungsfaktor $f_{thermo}$, welcher die maximale Drehzahl $n_{max,\ EAV}$ entsprechend reduziert. Auf diese Weise wird sichergestellt, dass der EAV 19 nur mit solchen Drehzahlen angetrieben wird, bei denen betriebspunktabhängig ein sinnvoller Ladedruck $p_2$ zur Verfügung gestellt wird.

Weitere Randbedingungen werden wie folgt berücksichtigt:
Die in Fig. 4 dargestellten Randbedingungen betreffen einen Ladezustand (SoC - State of Charge) der Batterie 10 des elektrischen Bordnetzes 8, der sich zwischen 1 (vollständig geladen) und 0 (vollständig entladen) bewegen kann. Aus diesem Ladezustand $SoC_{Batterie}$ und einem Grenzladezustand $SoC_{grenz,\ Batterie}$ wird durch Differenzbildung ein Ladezustandsfaktor $f_{SoC}$ ermittelt. Der Grenzladezustand $SoC_{grenz,\ Batterie}$ beschreibt hierbei die maximal zugelassene Entladung der Fahrzeugbatterie und ist eine z.B. fahrzeugspezifische, ggf. auch einstellbare Größe, welche zwischen 0 und 1 frei gewählt werden kann. Die Berechnung des Ladezustandsfaktors $f_{SoC}$ als Differenz zwischen dem momentanen Ladezustand der Batterie $SoC_{Batterie}$ und dem Grenzladezustand stellt nun sicher, dass der Grenzladezustand nicht unterschritten wird, indem der Ladezustandsfaktor $f_{SoC}$, der ebenfalls zwischen 1 und 0 schwankt, die Drehzahl $n_{soll,\ thermo}$, ggf. auf eine Drehzahl $n_{soll,\ thermo,\ SoC}$ reduziert."

Als weiteres Kriterium wird ein thermischer Reduktionsfaktor $f_{Temp}$ bestimmt, welcher die Temperatur eines oder mehrerer antriebskritischer Bauteile berücksichtigt. Dies können beispielsweise Temperaturen des Elektromotors oder anderer wesentlicher Komponenten des elektrisch angetriebenen Verdichters 19 sein. Prinzipiell können auch thermische Randbedingungen anderer Motorbauteile hier einfließen. Dabei wird eine kritische Bauteiltemperatur $T_{krit}$ mit einer Ist-Bauteiltemperatur $T_{el.\ Bauteil}$ verglichen, indem eine Differenz gebildet wird. Und diese Differenz wird ins Verhältnis gesetzt zur kritischen Bauteiltemperatur $T_{krit}$. Es gilt die Beziehung

$$f_{Temp} = \frac{T_{krit} - T}{T_{krit}}$$

Der so bestimmte thermische Reduktionsfaktor $f_{Temp}$ reduziert gegebenenfalls die Drehzahl $n_{soll,\ thermo,\ SoC}$ weiter um einen Faktor, der sich ebenfalls zwischen Null und Eins bewegt, und zwar umso mehr je näher die Bauteiltemperatur $T_{el.\ Bauteil}$ an die kritische Temperatur heranreicht. Es ergibt sich eine Drehzahl $n_{soll,\ thermo,\ SoC,\ Temp}$.

Schließlich wird ein Verbrauchs-Rekuperationsfaktor $X_{Eco}$ bestimmt, der folgende Faktoren berücksichtigt. Zum einen wird die rekuperierte Energie $E_{Reku}$ berücksichtigt und die zum Antrieb der elektrisch angetriebenen Ladeeinrichtung aufgewendete Energie $E_{Boost}$ zur Dynamikunterstützung beim Aufbau des Ladedrucks $p_2$ berücksichtigt. Diese Energiedifferenz $\Delta E_{Eco}$ wird über einen zweiten Bilanzzeitraum $t_{V2}$ erfasst. Dieser zweite Bilanzzeitraum entspricht dabei einem Gesamt-Betriebszyklus des Motors - beispielsweise die Gesamt-Fahrtdauer.

Zur Ermittlung des Faktors wird diese Differenz $\Delta E_{Eco}$ ins Verhältnis gesetzt zu einem Unterstützungsenergiebedarf $E_{Bedarf,Boost}$, der über einen mitlaufenden Bilanzzeitraum $t_{V1}$ ermittelt wird, der kleiner ist als der Bilanzzeitraum $t_{V2}$ und sich mit dessen Erweiterung bei sich kontinuierlich verlängerndem Gesamt-Betriebszyklus des Motors verschiebt. Es handelt sich bei dem Bilanzzeitraum $t_{V1}$ um ein mitwanderndes Zeitfenster. Für diesen Zeitraum, der in der Regel zwischen 1 und 10 min oder noch besser, zwischen 2 und 3 min liegt, wird der Energiebedarf $E_{Bedarf, Boost}$ ermittelt, indem aus der individuellen Fahrweise, einem Streckenprofils oder anderen Betriebszustandsgrößen der Energiebedarf ermittelt wird. Dazu können Kennfelder, Prädiktionsberechnungen oder erwartete Streckenprofile, die beispielsweise aus einer Navigationseinrichtung ableitbar sind, genutzt werden.

Zur Anwendung dieses Verbrauchs-/ Rekuperationsfaktors $X_{Eco}$ kommt es nur, wenn das Verhältnis zwischen der Energiebilanz über den Bilanzzeitraum $t_{V2}$ und dem über den Zeitraum $t_{V1}$ der ermittelten Energiebedarf $E_{Bedarf, Boost}$ kleiner Eins ist. Der so ermittelte Reduktionsfaktor reduziert dann gegebenenfalls die Drehzahl $n_{soll, thermo, SoC, Temp}$ weiter zur Drehzahl $n_{soll, thermo, SoC, Temp, eco}$ die dann der Solldrehzahl $n_{soll, EAV}$ des Motors 18 entspricht. Im Falle, dass der Reduktionsfaktor $X_{Eco}$ größer oder gleich Eins ist, findet keine Reduktion statt. Steht kein rekuperierter Energie-überschuss zur Verfügung ($\Delta E_{Eco} = 0$), wird verhindert, dass die elektrisch angetriebene Ladeeinrichtung überhaupt verwendbar ist.

Durch die Wahl der Dauer des ersten Bilanzzeitraums $t_{V1}$, der kontinuierlich bestimmt wird und damit auch für die anderen Reduktionsfaktoren $f_{thermo}$, $f_{SoC}$ und $f_{Temp}$ gilt, wird sichergestellt, dass sich Veränderungen der Randbedingungen nur allmählich oder schrittweise auf den Reduktionsfaktor auswirken und so sichergestellt wird, dass sich das Fahrverhalten bzw. das Ansprechverhalten des Motors beim Beschleunigen nur allmählich verändert. Damit können sprunghafte Veränderungen des Ansprechverhaltens ausgeschlossen werden.

In der Fig. 4 ist der gleiche Zusammenhang für einen Motor mit einem euATL dargestellt, bei dem über die bzw. den Reduktionsfaktor nicht die Drehzahl $n_{Soll,EAV}$ sondern das Drehmoment $M_{soll, euATL}$ bestimmt werden kann. Hier kann die rekuperierte Energie $E_{Reku}$ direkt über den Elektromotor 7 in das elektrische Bordnetz 8 bzw. die Batterie 8a eingespeist werden.

Bei der Ausführung der elektrisch angetriebenen Ladeeinrichtung als EAV 18 kann die rekuperierte Energie nur über die elektrische Maschine (RSG) 11 gewonnen werden und es kann beispielsweise festgelegt werden, dass nur ein bestimmter Prozentsatz dieser rekuperierten Energie als Boost-Energie für den Elektromotor 18 zur Verfügung gestellt werden kann.

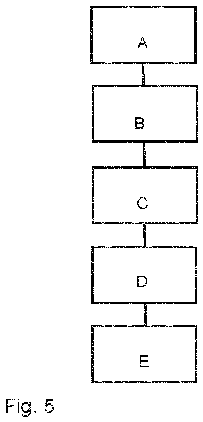

Fig. 5 zeigt den Ablauf des erfindungsgemäßen Verfahrens zum Betreiben eines Verbrennungsmotors mit einem System zur Aufladung, das einen Abgasturbolader 3 und eine elektrisch angetriebene Ladeeinrichtung zur Dynamikunterstützung beim Aufbau eines Ladedrucks $p_2$ umfasst. Dabei sind folgende Schritte vorgesehen:

A   Bestimmen eines Antriebskriteriums $M_{soll, euATL}$; $n_{soll, EAV}$

B   Festlegen einer Ausgangsgröße des Antriebskriteriums ($M_{euATL}$, $n_{EAV}$)

C   kontinuierliches Bestimmen eines Reduktionsfaktors ($f_{thermo}$, $f_{SoC}$, $f_{Temp}$, $X_{Eco}$) des Antriebskriteriums ($n_{soll,EAV}$, $M_{soll, euATL}$) innerhalb eines Bilanzzeitraums $t_{V1}$

D   Anwenden des Reduktionsfaktors auf das Antriebskriterium

E   Betreiben der Ladeeinrichtung mit dem um den Reduktionsfaktor verringerten Antriebskriterium.

Dabei sind Ausführungen möglich, bei denen nicht alle der oben angegebenen Reduktionsfaktoren berücksichtigt werden oder einzelne Reduktionsfaktoren nur zeitweise oder innerhalb unterschiedlicher Bilanzzeiträume $t_{V1}$ berücksichtigt werden, wie in den beigefügten Ansprüchen definiert.

**Bezugszeichenliste**

| | |
|---|---|
| 1 | Verbrennungsmotor |
| 2 | System zur Aufladung |
| 3 | Abgasturbolader (ATL, euATL) |
| 4 | Laufzeugwelle |
| 5 | Turbine |
| 6 | Verdichter (ATL) |
| 7 | Elektromotor (euATL) |
| 8 | elektrisches Bordnetz |
| 9 | Steuergerät |
| 10 | Stromspeicher/Batterie |
| 11 | elektrische Maschine (RSG) |
| 12 | Kurbelwelle |
| 13 | Kolben |
| 14 | Zylinder |
| 15 | Ansaugtrakt |
| 16 | Abgastrakt |
| 17 | Verdichter (EAV) |
| 18 | Elektromotor (EAV) |
| 19 | elektrisch angetriebener Verdichter |

(EAV)

| 90 | Steuerbereich |
| 100 | Fahrzeug |
| M, n, I, V | Antriebskriterium (Moment, Drehzahl, Stromstärke, Spannung) |
| $M_{euATL}$ | Ausgangsgröße |
| $N_{EAV}$ | Ausgangsgröße |
| $n_{soll, EAV}$ | Solldrehzahl |
| $n_{max, EAV}$ | Maximaldrehzahl |
| $M_{soll, euATL}$ | Sollmoment |
| $M_{max, euATL}$ | Maximalmoment |
| $p_2$ | Ladedruck |
| $p_{2, thermo}$ | thermodynamisch sinnvoller Ladedruck |
| $f_{thermo}$ | thermodynamischer Reduktionsfaktor |
| $n_{soll, thermo}$ | thermodynamisch sinnvolle Drehzahl |
| $M_{soll, thermo}$ | thermodynamisch sinnvolles Moment |
| $SoC_{Batterie}$ | Ladezustand des Stromspeichers |
| $SOC_{grenz, Batterie}$ | Grenzladezustand |
| $f_{SoC}$ | Ladezustandsfaktor/Reduktionsfaktor |
| $f_{Temp}$ | thermischer Reduktionsfaktor |
| $T_{krit}$ | kritische Bauteiltemperatur |
| $T_{el. Bauteil}$ | Ist-Temperatur |
| $X_{Eco}$ | Verbrauchs-/Rekuperationsfaktor |
| $E_{Reku}$ | rekuperierte Energie |
| $E_{Boost}$ | verbrauchte Energie |
| $t_{V2}$ | zweiter Bilanzzeitraum |
| $\Delta E_{Eco}$ | Energiebilanz |
| $E_{Bedarf, Boost}$ | Energiebedarf |
| $t_{V1}$ | erster Bilanzzeitraum |

**Patentansprüche**

1. Verfahren zum Betreiben eines Verbrennungsmotors (1) mit einem System (2) zur Aufladung, das eine elektrisch angetriebene Ladeeinrichtung (3, 7, 19) zur Dynamikunterstützung beim Aufbau eines Ladedrucks ($p_2$) umfasst, die entweder als elektrisch unterstützter Abgasturbolader (3, 7) oder als elektrisch angetriebener Verdichter (19), der zusätzlich zu einem Abgasturbolader (3) vorgesehen ist, ausgestaltet ist, mit:

   - Bestimmen eines Antriebskriteriums (M; n; I; V) der Ladeeinrichtung ((3, 7; 19);
   - Festlegen einer Ausgangsgröße ($M_{euATL}$; $n_{EAV}$) des Antriebskriteriums;
   - Kontinuierliches Bestimmen eines Reduktionsfaktors ($X_{Eco}$) des Antriebskriteriums innerhalb eines Bilanzzeitraums ($t_{V1}$), der in Abhängigkeit von einem Betriebszustandsprofil angepasst wird, wobei der Reduktionsfaktor einen elektrischen Verbrauchs-/Rekuperationsfaktor ($X_{Eco}$) umfasst, bei dem berücksichtigt wird, wie groß der Anteil an rekuperativ gewonnener Energie ist, der in der elektrischen Ladeeinrichtung ((3, 7; 19) zur Verfügung steht;
   - Anwenden des Reduktionsfaktors ($f_{thermo}$; $f_{SoC}$; $f_{Temp}$; $X_{Eco}$) auf die Ausgangsgröße ($M_{euATL}$; $n_{EAV}$) das Antriebskriterium und
   - Betreiben der Ladeeinrichtung (3, 7; 19) mit dem um den Reduktionsfaktor ($f_{thermo}$; $f_{SoC}$; $f_{Temp}$; $X_{Eco}$) verringerten Antriebskriterium ($M_{soll, euATL}$; $n_{soll, EAV}$).

2. Verfahren nach Anspruch 1, wobei das Antriebskriterium (M; n; I; V) eine der folgenden Größen umfasst: ein Antriebsmoment (M), eine Antriebsdrehzahl (n), einen Versorgungsstrom (I) und/oder eine Versorgungsspannung (V).

3. Verfahren nach Anspruch 1 oder 2, wobei der Reduktionsfaktor ($f_{thermo}$; $f_{SoC}$; $f_{Temp}$; $X_{Eco}$) optional einen der folgenden Faktoren umfasst: einen thermodynamischen Faktor ($f_{thermo}$); einen Ladezustandsfaktor ($f_{SoC}$); einen Temperaturfaktor ($f_{Temp}$).

4. Verfahren nach Anspruch 3, wobei der Verbrauchs-/Rekuperationsfaktor ($X_{Eco}$) eine über einen weiteren Bilanzzeitraum ($t_{V2}$) ermittelte Energiedifferenz ($\Delta E_{Eco}$) zwischen einer rekuperierten Energiegröße ($E_{Reku}$) und einer Unterstützungsenergiegröße ($E_{Boost}$) und eine für den Bilanzzeitraum ($t_{V1}$) ermittelte Bedarfsenergiegröße ($E_{Bedarf,Boost}$) nach folgender Beziehung berücksichtigt:

$$X_{Eco} = \frac{\Delta E_{Eco}}{E_{Bedarf,Boost}}$$

5. Verfahren nach Anspruch 4, wobei der erste Bilanzzeitraum ($t_{V1}$) kleiner ist als der zweite Bilanzzeitraum ($t_{V2}$) ist.

6. Verfahren nach Anspruch 4 oder 5, wobei der erste Bilanzzeitraum ($t_{V1}$) 1 bis 10 min beträgt und bevorzugt 2 bis 3 min beträgt.

7. Verfahren nach einem der Ansprüche 4 bis 6, wobei der Verbrauchs-/Rekuperationsfaktor ($X_{Eco}$) als Reduktionsfaktor berücksichtigt wird, wenn der Verbrauchs-/Rekuperationsfaktor ($X_{Eco}$) kleiner als eins ist.

8. Verfahren nach einem der Ansprüche 3 bis 7, wobei der thermodynamische Faktor ($f_{thermo}$) so bestimmt wird, dass er ein Maximum des Antriebskriteriums ($M_{max, euATL}$; $n_{max, EAV}$) so reduziert, dass während der Dynamikunterstützung mittels der Ladeeinrichtung ein maximaler, thermodynamisch sinnvoller Ladedruck ($p_{2thermo}$) aufbaubar ist.

**9.** Verfahren nach einem der Ansprüche 3 bis 8, wobei der Ladezustandsfaktor ($f_{SoC}$)aus einer Differenz zwischen einem Ist-Ladezustand (SoC) und einem Grenzladezustand ($SoC_{grenz}$) bestimmbar ist.

**10.** Verfahren nach einem der Ansprüche 3 bis 9, wobei der Temperaturfaktor ($f_{Temp}$) aus einer Differenz zwischen einer kritischen Bauteiltemperatur ($T_{krit}$) und einer Ist-Bauteiltemperatur (T) bestimmbar ist.

**11.** Verfahren nach Anspruch 10, wobei sich der Temperaturfaktor ($f_{Temp}$) aus der Beziehung

$$f_{Temp} = \frac{T_{krit} - T}{T_{krit}}$$

ergibt.

**12.** Verbrennungsmotor (1) mit einer Ladeeinrichtung (3, 7; 19) und ein Steuergerät (9), wobei die Ladeeinrichtung (3, 7; 19) als elektrisch unterstützten Abgasturbolader (3, 7) oder elektrisch angetriebene Verdichter (19), der zusätzlich zu einem Abgasturbolader (3) vorgesehen ist, ausgebildet ist und das Steuergerät (9) dazu eingerichtet ist, das Verfahren nach einem der Ansprüche 1 bis 11 auszuführen und dieses Verfahren im Betrieb des Verbrennungsmotors ausführt , wobei das Antriebskriterium bei einer als elektrisch unterstützten Abgasturbolader (3, 7) ausgebildeten Ladeeinrichtung ein Antriebsmoment ($M_{soll, euATL}$) ist, und bei einer als elektrisch angetriebene Verdichter (19) ausgebildeten Ladeeinrichtung eine Antriebsdrehzahl ($n_{soll, EAV}$) ist.

**13.** Kraftfahrzeug (100) mit einem Verbrennungsmotor (1) nach Anspruch 12.

**Claims**

**1.** Method for operating an internal combustion engine (1) with a system (2) for supercharging comprising an electrically driven supercharging device (3, 7, 19) for dynamic support in the build-up of a boost pressure ($p_2$), which is configured either as an electrically assisted exhaust gas turbocharger (3, 7) or as an electrically driven compressor (19) which is provided in addition to an exhaust gas turbocharger (3), comprising:

- determining a drive criterion (M; n; I; V) of the supercharging device (3, 7; 19);
- defining an output variable ($M_{euATL}$; $n_{EAV}$) of the drive criterion;
- continuously determining a reduction factor ($X_{Eco}$) of the drive criterion within a balance period ($t_{V1}$), which is adjusted in a manner dependent on an operating state profile, wherein the reduction factor comprises an electrical consumption/recuperation factor ($X_{Eco}$), which takes into account, the proportion of recuperative energy that is available in the electrical supercharging device (3, 7; 19);
- applying the reduction factor ($f_{thermo}$; $f_{SoC}$; $f_{Temp}$; $X_{Eco}$) to the output variable ($M_{euATL}$; $n_{EAV}$) the drive criterion, and
- operating the supercharging device (3, 7; 19) with the drive criterion ($M_{soll, euATL}$; $n_{soll, EAV}$) reduced by the reduction factor ($f_{thermo}$; $f_{SoC}$; $f_{Temp}$; $X_{Eco}$).

**2.** Method according to Claim 1, wherein the drive criterion (M; n; I; V) comprises one of the following variables: a drive torque (M), a drive speed (n), a supply current (I) and/or a supply voltage (V).

**3.** Method according to Claim 1 or 2, wherein the reduction factor ($f_{thermo}$; $f_{SoC}$; $f_{Temp}$; $X_{Eco}$) optionally comprises one of the following factors: a thermodynamic factor ($f_{thermo}$); a supercharging state factor ($f_{SoC}$); a temperature factor ($f_{Temp}$).

**4.** Method according to Claim 3, wherein the consumption / recuperation factor ($X_{Eco}$) takes into consideration an energy difference ($\Delta E_{Eco}$) determined over a further balance period ($t_{V2}$) between a recuperated energy quantity ($E_{Reku}$) and an assistance energy quantity ($E_{Boost}$), and a demand energy quantity ($E_{Bedarf,Boost}$) calculated for the balance period ($t_{V1}$) according to the following relationship:

$$X_{Eco} = \frac{\Delta E_{Eco}}{E_{Bedarf,Boost}}$$

**5.** Method according to Claim 4, wherein the first balance period ($t_{V1}$) is smaller than the second balance period ($t_{V2}$).

**6.** Method according to Claim 4 or 5, wherein the first balance period ($t_{V1}$) is 1 to 10 min and preferably 2 to 3 min.

**7.** Method according to one of Claims 4 to 6, wherein the consumption/recuperation factor ($X_{Eco}$) is taken into account as a reduction factor if the consumption/recuperation factor ($X_{Eco}$) is less than one.

**8.** Method according to one of Claims 3 to 7, wherein the thermodynamic factor ($f_{thermo}$) is determined in such a way that it reduces a maximum of the drive criterion ($M_{max, euATL}$; $n_{max, EAV}$) such that a maximum, thermodynamically meaningful boost pressure ($p_{2thermo}$) can be built up during dynamic assistance by means of the supercharging device.

9. Method according to one of Claims 3 to 8, wherein the supercharging state factor ($f_{SoC}$) can be determined from a difference between an actual charge state (SoC) and a limit charge state ($SoC_{grenz}$).

10. Method according to one of Claims 3 to 9, wherein the temperature factor ($f_{temp}$) can be determined from a difference between a critical component temperature ($T_{krit}$) and an actual component temperature (T).

11. Method according to Claim 10, wherein the temperature factor ($f_{temp}$) results from the relationship

$$f_{Temp} = \frac{T_{krit} - T}{T_{krit}}$$

12. Internal combustion engine (1) with a supercharging device (3, 7; 19) and a control unit (9), wherein the supercharging device (3, 7; 19) is configured as an electrically assisted exhaust gas turbocharger (3, 7) or electrically driven compressor (19) which is provided in addition to an exhaust gas turbocharger (3), and the control unit (9) is configured to carry out the method according to one of Claims 1 to 11, and carries out this method during operation of the internal combustion engine, wherein the drive criterion, in the case of a supercharging device configured as an electrically assisted exhaust gas turbocharger (3, 7), is a drive torque ($M_{solll, euATL}$), and, in the case of a supercharging device designed as an electrically driven compressor (19), is a drive speed ($n_{soll, EAV}$).

13. Motor vehicle (100) with an internal combustion engine (1) according to Claim 12.

**Revendications**

1. Procédé pour faire fonctionner un moteur à combustion interne (1) avec un système (2) de suralimentation, qui comprend un dispositif de charge (3, 7, 19) entraîné électriquement servant à l'assistance dynamique lors de l'établissement d'une pression de charge ($p_2$), lequel est réalisé soit sous la forme d'un turbocompresseur à gaz d'échappement (3, 7) assisté électriquement, soit sous la forme d'un compresseur (19) entraîné électriquement, qui est prévu en plus d'un turbocompresseur à gaz d'échappement (3), comprenant :

   - détermination d'un critère d'entraînement (M ; n ; I ; V) du dispositif de charge (3, 7 ; 19) ;
   - définition d'une grandeur de sortie ($M_{euATL}$ ; $n_{EAV}$) du critère d'entraînement ;
   - détermination continue d'un facteur de réduction ($X_{Eco}$) du critère d'entraînement à l'intérieur d'une période de bilan ($t_{v1}$), qui est adapté en fonction d'un profil d'état de fonctionnement, le facteur de réduction comprenant un facteur de consommation/récupération électrique ($X_{Eco}$), avec lequel il est tenu compte de l'importance de la part d'énergie obtenue par récupération qui est disponible dans le dispositif de charge (3, 7 ; 19) électrique ;
   - application du facteur de réduction ($f_{thermo}$ ; $f_{SoC}$ ; $f_{Temp}$ ; $X_{Eco}$) à la grandeur de sortie ($M_{euATL}$ ; $n_{EAV}$) du critère d'entraînement et
   - fonctionnement du dispositif de charge (3, 7 ; 19) avec le critère d'entraînement ($M_{soll, euATL}$ ; $n_{soll, EAV}$) diminué du facteur de réduction ($f_{thermo}$ ; $f_{SoC}$ ; $f_{Temp}$; $X_{Eco}$).

2. Procédé selon la revendication 1, le critère d'entraînement (M ; n ; I ; V) comprenant l'une des grandeurs suivantes : un couple d'entraînement (M), une vitesse de rotation d'entraînement (n), un courant d'alimentation (I) et/ou une tension d'alimentation (V).

3. Procédé selon la revendication 1 ou 2, le facteur de réduction ($f_{thermo}$ ; $f_{SoC}$ ; $f_{Temp}$ ; $X_{Eco}$) comprenant éventuellement l'un des facteurs suivants : un facteur thermodynamique ($f_{thermo}$) ; un facteur d'état de charge ($f_{SoC}$) ; un facteur de température ($f_{Temp}$).

4. Procédé selon la revendication 3, le facteur de consommation/récupération ($X_{Eco}$) étant une différence d'énergie ($\Delta E_{Eco}$) déterminée sur une période de bilan supplémentaire ($t_{V2}$) entre une grandeur d'énergie récupérée ($E_{Reku}$) et une grandeur d'énergie d'assistance ($E_{Boost}$) et une quantité d'énergie de besoin ($E_{Bedarf,Boost}$) déterminée pour la une période de bilan ($t_{V1}$) est prise en compte selon la relation suivante :

$$X_{Eco} = \frac{\Delta E_{Eco}}{E_{Bedarf,Boost}}$$

5. Procédé selon la revendication 4, la première période de bilan ($t_{V1}$) est inférieure à la deuxième période de bilan ($t_{V2}$).

6. Procédé selon la revendication 4 ou 5, la première période de bilan ($t_{V1}$) étant de 1 à 10 minutes et de préférence de 2 à 3 minutes.

7. Procédé selon l'une des revendications 4 à 6, le facteur de consommation/récupération ($X_{Eco}$) étant pris en compte en tant que facteur de réduction lorsque le facteur de consommation/récupération ($X_{Eco}$) est inférieur à un.

8. Procédé selon l'une des revendications 3 à 7, le facteur thermodynamique ($f_{thermo}$) étant déterminé de telle sorte qu'il réduit un maximum du critère d'entraînement ($M_{max, euATL}$ ; $n_{max, EAV}$) de sorte qu'une pression de charge ($p_{2thermo}$) maximale et thermodynamiquement raisonnable puisse être établie pendant l'assistance dynamique au moyen du dispositif de charge.

9. Procédé selon l'une des revendications 3 à 8, le facteur d'état de charge ($f_{SoC}$) pouvant être déterminé à partir d'une différence entre un état de charge réel (SoC) et un état de charge limite ($SoC_{grenz}$).

10. Procédé selon l'une des revendications 3 à 9, le facteur de température ($f_{Temp}$) pouvant être déterminé à partir d'une différence entre une température de composant critique ($T_{krit}$) et une température de composant réelle (T).

11. Procédé selon la revendication 10, le facteur de température ($f_{Temp}$) étant obtenu à partir de la relation

$$f_{Temp} = \frac{T_{krit} - T}{T_{krit}}$$

12. Moteur à combustion interne (1) comprenant un dispositif de charge (3, 7 ; 19) et un contrôleur (9), le dispositif de charge (3, 7 ; 19) étant réalisé sous la forme d'un turbocompresseur à gaz d'échappement (3, 7) assisté électriquement ou d'un compresseur (19) entraîné électriquement, qui est prévu en plus d'un turbocompresseur à gaz d'échappement (3), et le contrôleur (9) étant conçu pour mettre en œuvre le procédé selon l'une des revendications 1 à 11 et mettant en œuvre ce procédé lors du fonctionnement du moteur à combustion interne, le critère d'entraînement étant un couple d'entraînement ($M_{soll, euATL}$) dans le cas d'un dispositif de charge réalisé sous la forme d'un turbocompresseur à gaz d'échappement (3, 7) assisté électriquement, et une vitesse de rotation d'entraînement ($n_{soll, EAV}$) dans le cas d'un dispositif de charge réalisé sous la forme d'un compresseur (19) entraîné électriquement.

13. Véhicule automobile (100) comprenant un moteur à combustion interne (1) selon la revendication 12.

Fig. 1

Fig. 2

Fig. 3

Fig. 4

Fig. 5

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10223810 A1
- DE 102015006401 A1
- US 20030106541 A1
- DE 10203974 A1
- US 2003141851 A1
- EP 3396132 A1